# EUROPEAN PATENT SPECIFICATION

(11) **EP 3 750 711 B1**
(45) Date of publication and mention of the grant of the patent: **22.12.2021**
(21) Application number: 19850784.0
(22) Date of filing: 12.11.2019
(51) Int. Cl.: B41F 31/30, B41F 31/32, B41F 31/34, B41F 31/36

(54) **INKING MECHANISM FOR OFFSET PRINTING DEVICE AND PRINTING MACHINE**
FARBWERK FÜR OFFSETDRUCKVORRICHTUNG UND DRUCKMASCHINE
MÉCANISME D'ENCRAGE POUR DISPOSITIF D'IMPRESSION OFFSET ET MACHINE D'IMPRESSION

(30) Priority: 25.04.2019 CN 201910339248
(43) Date of publication of application: 16.12.2020
(73) Proprietor: Zhejiang Weigang Technology Co., Ltd., Wenzhou, Zhejiang 325400 (CN)
(72) Inventor: CHE, Wenchun, Wenzhou Zhejiang 325400 (CN); YU, Jinhua, Wenzhou Zhejiang 325400 (CN); CHEN, Qingtao, Wenzhou Zhejiang 325400 (CN); ZHENG, Xiangqi, Wenzhou Zhejiang 325400 (CN); ZHAO, Peng, Wenzhou Zhejiang 325400 (CN)
(74) Representative: Kayahan, Senem
(86) International application number: PCT/CN2019/117374
(87) International publication number: WO 2020/215674

(56) References cited:
- EP-A2- 0 903 228
- EP-A2- 1 155 843
- EP-A2- 1 155 843
- CN-A- 108 528 041
- CN-A- 108 544 834
- CN-A- 109 514 992
- CN-A- 110 001 187
- CN-U- 208 118 649
- JP-A- S63 251 237
- JP-A- 2007 007 874
- US-A- 5 339 736
- US-A- 5 823 107

## Description

### TECHNICAL FIELD

The present disclosure relates to a printing press, and more particularly relates to an inking mechanism of an offset printing apparatus.

### BACKGROUND

The offset printing apparatus includes a plate roller, a transfer roller, and an imprinting roller which are conjoined with one another. The continuous printing is achieved by replacing plate rollers and transfer rollers with different outer diameters, and thus the roll of paper does not need to roll backwards. In order to enable the inking mechanism to match the replaced plate rollers with different outer diameters, the inking roller is connected to the ink vibrator 1 through a swinging arm. The position of the inking roller is adjusted through the movement of the swinging arm, so that the inking roller can be matched with the size of the plate roller. In order to stabilize the pressure when the plate roller is matched with the inking roller, the roller bearers placed at the two ends of the inking roller are correspondingly matched with the roller bearers placed at the two ends of the plate roller in order to roll in relation to one another.

However, after the size of the plate roller is changed, the position of the matching point of the roller bearer of the inking roller on the swinging arm, and the roller bearer of the plate roller is shifted greatly, resulting in a large pressure change generated when the plate roller is matched with the inking roller, which does not satisfy the printing requirements. JP S63 251237 A relates to an inking mechanism provided with a nip pressure adjusting device for reducing the nip pressure variation due to thermal expansion of the roller.

### SUMMARY

In view of the technical problems existing in the background, the technical problem solved by the present disclosure is to provide an inking mechanism and a printing press of an offset printing apparatus, which can ensure that the inking roller and the plate roller when matched with each other will experience less pressure change when the size specification of the plate roller is changed.

According to the invention, an inking mechanism as defined in claim 1 is provided, namely an inking mechanism of an offset printing apparatus, comprising an ink vibrator; wherein a front side of the ink vibrator is connected to a first shaft through a first swinging arm; the first shaft is provided with a first inking roller; a back side of the ink vibrator is connected to a second shaft through a second swinging arm; the second shaft is provided with a second inking roller, wherein, a left circular base and a right circular base which is opposite to the left circular base of the first inking roller are respectively provided with a first holder; the first holder is connected to the first shaft, the first holder is rotatably arranged relative to the first shaft, and the first holder is provided with a first roller bearer; a left circular base and a right circular base which is opposite to the left circular base of the second inking roller are respectively provided with a second holder; the second holder is connected to the second shaft, the second holder is rotatably arranged relative to the second shaft, and the second holder is provided with a second roller bearer and the first inking roller and the second inking roller are respectively cooperating with and roll oppositely with a plate roller; wherein the first swinging arm is closer than the second swinging arm to the first roller bearer or second roller bearer in an axial direction of the ink vibrator; wherein a first pull arm is connected between the first holder and the second swinging arm; the first holder and the second swinging arm are respectively hinged to the first pull arm; a second pull arm is connected between the second holder and the first swinging arm; the second holder and the first swinging arm are respectively hinged to the second pull arm.

According to an embodiment the first swinging arm is connected to a first transmission device, and the second swinging arm is connected to a second transmission device.

According to another embodiment the roll shaft of the ink vibrator is connected in the roll sleeve, and the roll sleeve is connected on a frame; the first swinging arm and the second swinging arm are separately hinged on the roll sleeve. The ink vibrator is matched with and rolls oppositely with the first inking roller; a first eccentric sleeve is arranged between the roll sleeve and the first swinging arm; the ink vibrator is matched with and rolls oppositely with the second ink vibrator ; and a second eccentric sleeve is arranged between the roll sleeve and the second swinging arm.

According to a further embodiment the first roller bearer is rotatably arranged on the first holder to rotate around the center of the first holder, and the first roller bearer is arranged on the first holder through a first radial adjustment device; the first radial adjustment device includes a third eccentric sleeve; the third eccentric sleeve is sleeved on the first shaft, and the third eccentric sleeve is arranged relative to the first shaft and can be capable of being adjusted by rotation; the first roller bearer is sleeved outside the third eccentric sleeve, and the first roller bearer is rotatably arranged relative to the third eccentric sleeve. A first worm gear is sleeved on the first shaft; the first worm gear is rotatably arranged relative to the first shaft, and the first worm gear is connected to the third eccentric sleeve; the third eccentric sleeve and the first worm gear are integrally arranged or separately arranged; the first worm gear is connected to the drive of the first worm; the first worm is arranged on the first holder and capable of being adjusted by rotation; a first bearing is arranged between the first roller bearer and the third eccentric sleeve; a first rotating inner sleeve is arranged on the first shaft, and the first holder is connected to the first rotating inner sleeve; the third eccentric sleeve and the first worm gear are sleeved on the first rotating inner sleeve of the first shaft.

According to a further embodiment the first roller bearer is arranged on the third eccentric sleeve through the first bearing, the third eccentric sleeve is connected to the first worm gear, the third eccentric sleeve and the first worm gear are integrally arranged or separately arranged, the first worm gear and the third eccentric sleeve are arranged on the first shaft through the first rotating inner sleeve or a second bearing, the first worm gear is connected to the drive of the first worm, and the first worm is arranged on the first holder.

According to a further embodiment the second roller bearer is rotatably arranged on the second holder to rotate around the center of the second holder, and the second roller bearer 11 is arranged on the second holder through a second radial adjustment device; the second radial adjustment device includes a fourth eccentric sleeve, and the fourth eccentric sleeve is sleeved on the second shaft; the fourth eccentric sleeve is arranged relative to the second shaft and capable of being adjusted by rotation; the second roller bearer is sleeved outside the fourth eccentric sleeve, and the second roller bearer 11 is rotatably arranged relative to the fourth eccentric sleeve. A second worm gear is sleeved on the second shaft; the second worm gear is rotatably arranged relative to the second shaft; the second worm gear is connected to the fourth eccentric sleeve; the fourth eccentric sleeve and the second worm gear are integrally arranged or separately arranged; the second worm gear is connected to the drive of the second worm; the second worm is arranged on the second holder and capable of being adjusted by rotation; a third bearing is arranged between the second roller bearer and the fourth eccentric sleeve, and a second rotating inner sleeve is arranged on the second shaft; the second holder is connected to the second rotating inner sleeve; the fourth eccentric sleeve and the second worm gear are sleeved on the second rotating inner sleeve of the second shaft.

According to a further embodiment the second roller bearer is arranged on the fourth eccentric sleeve through the third bearing, the fourth eccentric sleeve is connected to the second worm gear, the fourth eccentric sleeve and the second worm gear are integrally arranged or separately arranged, the second worm gear and the fourth eccentric sleeve are arranged on the second shaft through the second rotating inner sleeve or the fourth bearing, the second worm gear is connected to the drive of the second worm, and the second worm is arranged on the second holder.

According to a further embodiment a fifth bearing is arranged between the first inking roller and the first shaft, and a sixth bearing is arranged between the second inking roller and the second shaft. Alternatively, a seventh bearing is arranged between the first shaft and the first swinging arm, and an eighth bearing is arranged between the second shaft and the second swinging arm.

According to a further embodiment a printing press, including an offset printing press unit, characterized in that, the offset printing press unit includes the inking mechanism of the offset printing apparatus.

The advantages of the present disclosure are as follows. The first inking roller and the second inking roller are consistently adjusted by the inking mechanism of the offset printing apparatus through the movement of the first swinging arm and the second swinging arm, so as to cooperate with plate rollers of different size specifications to transfer ink. In addition, when the size specification of the plate roller is changed, the first pull arm, the second pull arm, the first swinging arm and the second swinging arm are cooperating with one another, so that the position of the matching point where the first roller bearer and the second roller bearer respectively corresponding to the first inking roller and the second inking roller oppositely roll with the roller bearers on both sides of the plate roller is less changed, and the pressure change of the first inking roller and the second inking roller, which are matched with the plate roller, is small and relatively stable, which does not affect the printing quality and effect. Therefore, the present disclosure has substantive features and progresses compared with the prior art.

### BRIEF DESCRIPTION OF THE DRAWINGS

The implementing modes of the present disclosure and the relevant details and working principle of the embodiments will be described hereinafter with reference to the drawings.
FIG. 1 is a structural schematic diagram of the present disclosure.
FIG. 2 is a structural schematic diagram showing the inking mechanism cooperates with the plate roller with a large size according to the present disclosure.
FIG. 3 is a structural schematic diagram showing that the inking mechanism cooperates with the plate roller with a small size according to the present disclosure.

### DETAILED DESCRIPTION OF THE EMBODIMENTS

According to the drawings, the inking mechanism of the offset printing apparatus in the present embodiment includes the ink vibrator 1. The front side of the ink vibrator 1 is connected to the first shaft 21 through the first swinging arm 5. The first shaft 21 is provided with the first inking roller 2. The back side of the ink vibrator 1 is connected to the second shaft 22 through the second swinging arm 9. The second shaft 22 is provided with the second inking roller 12. The swing of the first swinging arm 5 and the second swinging arm 9 can adjust the positions of the first inking roller 2 and second inking roller 12, so that the first inking roller 2 and second inking roller 12 are respectively cooperating with and roll oppositely with the plate rollers 13 of different sizes so as to transfer ink. The first inking roller 2 and the second inking roller 12 usually adopt the rubber rollers. The fifth bearing is arranged between the first inking roller 2 and the first shaft 21, and the sixth bearing is arranged between the second inking roller 12 and the second shaft 22. Alternatively, the seventh bearing is arranged between the first shaft 21 and the first swinging arm 5, and the eighth bearing is arranged between the second shaft 22 and the second swinging arm 9, so that the first inking roller 2 and the second inking roller 12 oppositely roll with and cooperate with the plate roller 13. The printing press includes an offset printing unit, and the offset printing unit includes the inking mechanism of the offset printing apparatus.

The left side and the right side of the first inking roller 2 are respectively provided with the first holder 4. The first holder 4 is connected to the first shaft 21. The first holder 4 is rotatably arranged relative to the first shaft 21. The first holder 4 can rotate relative to the first shaft 21 by connecting and setting a corresponding rotating inner sleeve or a bearing. The first holder 4 is provided with the first roller bearer 3. The first roller bearer 3 is cooperating with and rolls oppositely with the roller bearer on the plate roller 13 to make the pressure more stable. The left side and the right side of the second inking roller 12 are respectively connected to the second holder 10. The second holder 10 is connected to the second shaft 22. The second holder 10 is rotatably arranged relative to the second shaft 22. The second holder 10 can rotate relative to the second shaft 22 by connecting and setting a corresponding rotating inner sleeve or a bearing. The second holder 10 is provided with the second roller bearer 11. The second roller bearer 11 rolls oppositely with and is cooperating with the roller bearer on the plate roller 13 to make the pressure more stable. The first roller bearers 3 on both sides of the first inking roller 2 can roll oppositely with the roller bearers on both sides of the plate roller 13. The second roller bearers 11 on both sides of the second inking roller 12 can also roll oppositely with the roller bearers on both sides of the plate roller 13, so as to achieve a stable rolling pressure between the first inking roller 2 and the plate roller 13, and a stable rolling pressure between the second inking roller 12 and the plate roller 13.

The first pull arm 14 is connected between the first holder 4 and the second swinging arm 9. The first holder 4 and the second swinging arm 9 are respectively hinged to the first pull arm 14. The second pull arm 17 is connected between the second holder 10 and the first swinging arm 5. The second holder 10 and the first swinging arm 5 are respectively hinged to the second pull arm 17.

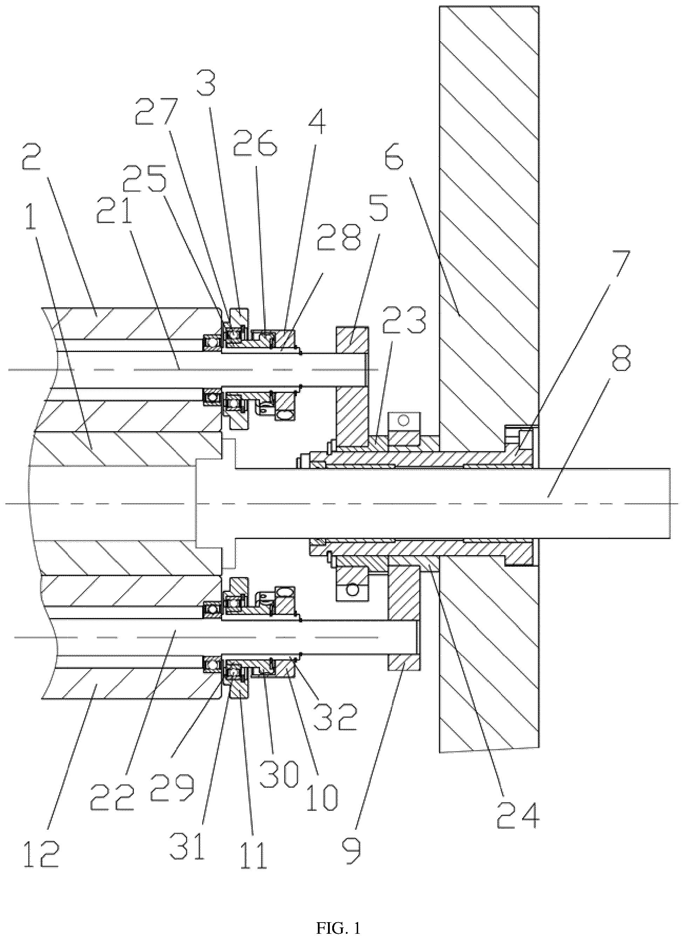

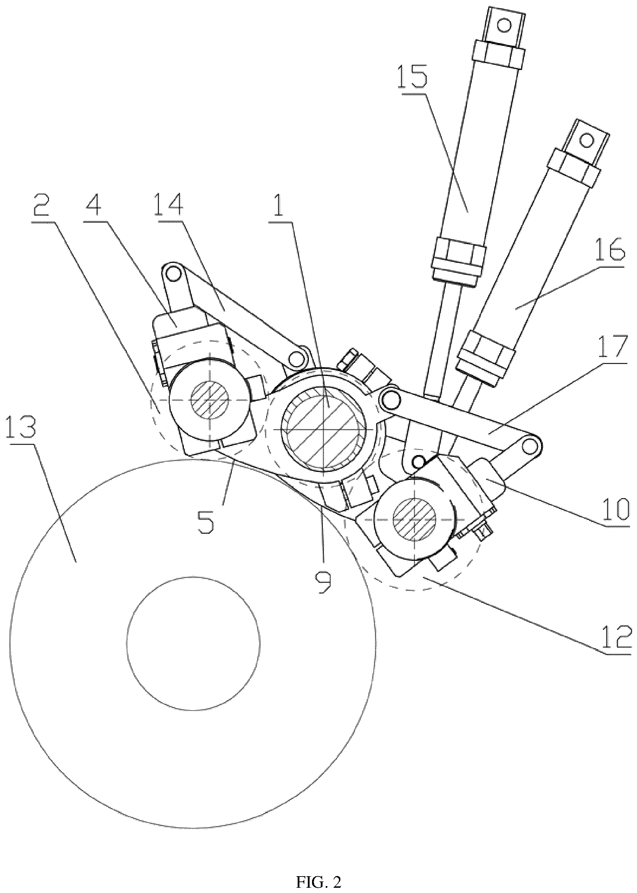

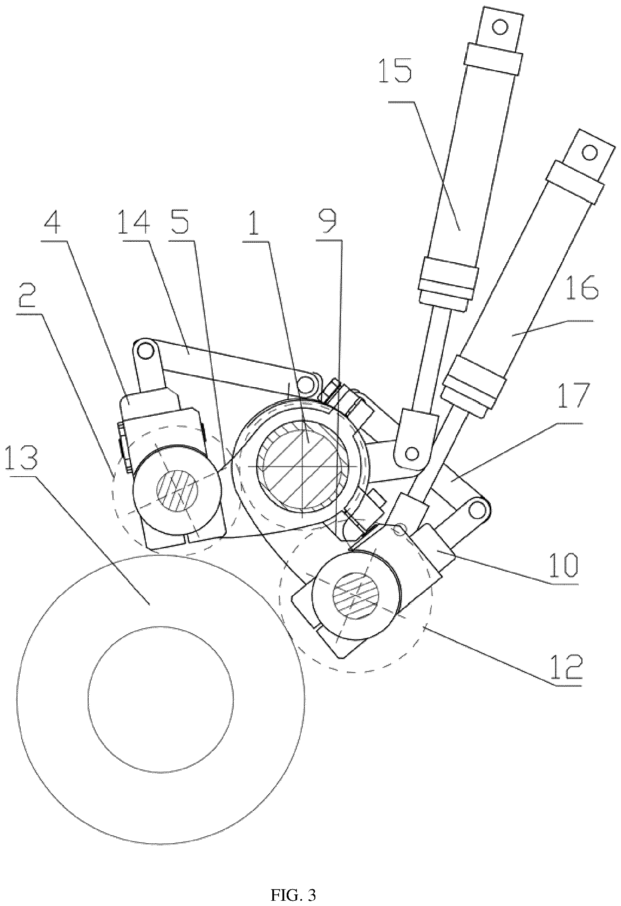

When the size specification of the plate roller 13 is changed, the first inking roller 2 and the second inking roller 12 are cooperating with the plate roller 13 to transfer ink by the movement of the first swinging arm 5 and the second swinging arm 9. When the size specification of the plate roller 13 is changed, the first pull arm 14, the second pull arm 17, the first swinging arm 5 and the second swinging arm 9 are cooperating with one another, so that the position of the mating point where the first roller bearer 3 and the second roller bearer 11 roll oppositely with the roller bearers on both sides of the plate roller 13 is changed less. The pressure of the first inking roller 2 and the second inking roller 12 which are matched with the plate roller 13 is changed less and relatively stable, without affecting the printing quality and effect. According to FIGS. 1-3, when the outer diameter of the plate roller 13 diminishes, the first swinging arm 5 swings counterclockwise, the first pull arm 14 pulls the first holder 4 and the second swinging arm 9, the first holder 4 rotates clockwise when the first swinging arm 5 swings counterclockwise, so that the first roller bearer 3 on the first holder 4 rotates clockwise synchronously, and the position of the matching point of the first roller bearer 3 and the roller bearers on the plate roller 13 is less changed compared with the position of the matching point of the first roller bearer 3 and the roller bearers on the plate roller 13 with a larger outer dimension. The second swinging arm 9 swings clockwise, the second swinging arm 17 pulls the second holder 10 and the first swinging arm 5, the second holder 10 rotates counterclockwise when the second swinging arm 9 swings clockwise, so that the second roller bearer 11 on the second holder 10 rotates counterclockwise synchronously, and the position of the matching point of the second roller bearer 11 and the roller bearers on the plate roller 13 is less changed compared with the position of the matching point of the second roller bearer 11 and the roller bearers on the plate roller 13 with a larger outer dimension. When the outer diameter of the plate roller 13 increases, an opposite matching action is performed.

The first swinging arm 5 is connected to the first transmission device 15, and the first swinging arm 5 is driven to swing around the center of the ink vibrator 1 by the first transmission device. The second swinging arm 9 is connected to the second transmission device 16, and the second swinging arm 9 is driven to swing around the center of the ink vibrator 1 by the second transmission device. An air cylinder, or a motor, can be used as a power source to drive the first transmission device and the second transmission device, and the embodiments all adopt the air cylinder.

In the present embodiment, the first swinging arm 5 and the second swinging arm 9 are hinged to the roll shaft 8 of the ink vibrator 1. In order that the swinging arm swings stably and the roll shaft 8 shifts stably, the first swinging arm 5 and the second swinging arm 9 can be hinged to the roll sleeve 7 of the roll shaft 8 to swing. The roll shaft 8 of the ink vibrator 1 is connected in the roll sleeve 7, and the roll shaft 8 is supported by the roll sleeve 7 to rotate and axially move. The roll sleeve 7 is connected to the frame 6. The first swinging arm 5 and the second swinging arm 9 are respectively hinged to the roll sleeve 7. The first swinging arm 5 and the second swinging arm 9 swing around the roll sleeve 7.

The ink vibrator 1 is matched with and oppositely rolls with the first inking roller 2. The ink vibrator 1 is matched with and oppositely rolls with the second inking roller 12. Further, the first eccentric sleeve 23 is additionally arranged between the roll sleeve 7 and the first swinging arm 5. The first eccentric sleeve 23 can be rotatably adjusted to adjust the fitting pressure between the first inking roller 2 and the ink vibrator 1. The second eccentric sleeve 24 is arranged between the roll sleeve 7 and the second swinging arm 9. The second eccentric sleeve 24 can be rotatably adjusted to adjust the fitting pressure between the second inking roller 12 and the ink vibrator 1. Further, the pressure between the ink vibrator 1 and the first inking roller 2, and the pressure between the ink vibrator 1 and the second inking roller 12 can be adjusted.

The first roller bearer 3 is arranged on the first holder 4 to rotate around its center of the first holder 4. For example, the first bearing 27 is arranged to allow the first roller bearer 3 to rotate. The first roller bearer 3 is arranged on the first holder 4 through the first radial adjustment device. The relative radial position of the first roller bearer 3 and the first shaft 21 is adjusted by the radial adjustment device. Namely, the axial center of the first roller bearer 3 is adjusted by the radial adjustment device, so as to change the distance of the axial center between the first roller bearer 3 on the first shaft 21 and the roller bearer (i.e., the plate roller bearer) on the plate roller which are press-fitted with one another, thereby realizing an adjustment of the fitting pressure between the first inking roll 2 on the first shaft 21, and the plate roller which are matched with one another. In the present embodiment, the first radial adjustment device includes the third eccentric sleeve 25. The third eccentric sleeve 25 is sleeved on the first shaft 21. The third eccentric sleeve 25 is arranged relative to the first shaft 21 and capable of being adjusted by rotation. The first roller bearer 3 is sleeved outside the third eccentric sleeve 25. The first roller bearer 3 is rotatably arranged relative to the third eccentric sleeve 25. The axial center of the first roller bearer 3 can be adjusted by rotatably adjusting the position of the third eccentric sleeve 25 and adjusting the relative radial position of the first roller bearer 3 and the first shaft 21, so as to change the distance of the axial center between the first roller bearer 3 on the first shaft 21 and the roller bearer on the plate roller 13 which are press-fitted with one another, thereby achieving an adjustment of the fitting pressure. The first worm gear 26 is sleeved on the first shaft 21, and the first worm gear 26 is rotatably arranged relative to the first shaft 21. For example, the first rotating inner sleeve 28 or the second bearing (not shown) is arranged to allow the first worm gear 26 to rotate on the first shaft 21. The first worm gear 26 is connected to the third eccentric sleeve 25. The first worm gear 26 and the third eccentric sleeve 25 rotate synchronously. The first worm gear 26 is connected to the drive of the first worm (not shown). The first worm is arranged on the first holder 4 and capable of being adjusted by rotation, and the first worm is rotated to drive the first worm gear 26 to rotate. As shown in the drawings, the first bearing 27 is arranged between the first roller bearer 3 and the third eccentric sleeve 25. The first rotating inner sleeve 28 is arranged on the first shaft 21. The first holder 4 is connected to the first rotating inner sleeve 28. The third eccentric sleeve 25 and the first worm gear 26 are sleeved on the first rotating inner sleeve 28 of the first shaft 21. The third eccentric sleeve 25 and the first worm gear 26 are integrally arranged or separately arranged. Namely, the first worm gear 26 and the third eccentric sleeve 25 can be connected to form an integral structure or a separated structure.

With reference to the drawings, in the present embodiment, the first roller bearer 3 is arranged on the third eccentric sleeve 25 through the first bearing 27, so that the first roller bearer 3 rotates on the third eccentric sleeve 25. The third eccentric sleeve 25 is connected to the first worm gear 26 (the third eccentric sleeve 25 and the first worm gear 26 are integrally arranged or separately arranged). The first worm gear 26 and the third eccentric sleeve 25 are arranged on the first shaft 21 through the first rotating inner sleeve 28 or the second bearing (not shown). The first worm gear 26 and the third eccentric sleeve 25 will rotate synchronously on the first shaft 21. The first worm gear 26 is connected to the drive of the first worm (not shown). The first worm is connected to the first holder 4. The first worm on the first holder 4 can be adjusted to drive the first worm gear 26 to rotate. The first holder 4 is connected to the first worm gear 26 through the first worm, which enables the first holder 4 to be connected to the first rotating inner sleeve 28. The distance of the axial center between the first roller bearer 3 on the first shaft 21 and the roller bearer (i.e., the plate roller bearer) on the plate roller 13 which are press-fitted with one another is changed, so as to realize an adjustment of the fitting pressure between the first inking roller 2 on the first shaft 21 and the plate roller 13 which are matched with one another.

The second roller bearer 11 is rotatably arranged on the second holder 10 to rotate around the center of the second holder 10. For example, the third bearing 31 is arranged to allow the second roller bearer 11 to rotate. The second roller bearer 11 is arranged on the second holder 10 through the second radial adjustment device. The relative radial position of the second roller bearer 11 and the second shaft 22 is adjusted through the radial adjustment device. Namely, the position of the axial center of the second roller bearer 11 is adjusted through the radial adjustment device, so as to change the distance of the axial center between the second roller bearer 11 on the second shaft 22 and the roller bearer (i.e., the plate roller bearer) on the plate roller 13 which are press-fitted with one another, thereby achieving an adjustment of the fitting pressure between the second inking roller 12 on the second shaft 22 and the plate roller 13 which are matched with one another. In the present embodiment, the second radial adjustment device includes the fourth eccentric sleeve 29. The fourth eccentric sleeve 29 is sleeved on the second shaft 22. The fourth eccentric sleeve 29 is arranged relative to the second shaft 22 and capable of being adjusted by rotation. The second roller bearer 11 is sleeved outside the fourth eccentric sleeve 29. The second roller bearer 11 is rotatably arranged relative to the fourth eccentric sleeve 29. The position of the axial center of the second roller bearer 11 can be adjusted by rotatably adjusting the position of the fourth eccentric sleeve 29 and adjusting the relative radial position of the second roller bearer 11 and the second shaft 22, so as to change the distance of the axial center between the second roller bearer 11 on the second shaft 22 and the roller bearer on the plate roller 13 which are press-fitted with one another, thereby realizing an adjustment of the fitting pressure. The second worm gear 30 is sleeved on the second shaft 22. The second worm gear 30 is rotatably arranged relative to the second shaft 22. For example, the second rotating inner sleeve 32 or the fourth bearing is arranged to allow the second worm gear 30 to rotate on the second shaft 22. The second worm gear 30 is connected to the fourth eccentric sleeve 29. The second worm gear 30 and the fourth eccentric sleeve 29 will rotate synchronously. The second worm gear 30 is connected to the drive of the second worm. The second worm is arranged on the second holder 10 and capable of being adjusted by rotation. The second worm is rotated to drive the second worm gear 30 to rotate. As shown in the drawings, the third bearing 31 is arranged between the second roller bearer 11 and the fourth eccentric sleeve 29. The second rotating inner sleeve 32 is arranged on the second shaft 22. The second holder 10 is connected to the second rotating inner sleeve 32. The fourth eccentric sleeve 29 and the second worm gear 30 are sleeved on the second rotating inner sleeve 32 of the second shaft 22. The fourth eccentric sleeve 29 and the second worm gear 30 are integrally arranged or separately arranged. Namely, the second worm gear 30 and the fourth eccentric sleeve 29 can be connected to form an integral structure or a separated structure.

With reference to the drawings, in the present embodiment, the second roller bearer 11 is arranged on the fourth eccentric sleeve 29 through the third bearing 31 so that the second roller bearer 11 rotates on the fourth eccentric sleeve 29. The fourth eccentric sleeve 29 is connected to the second worm gear 30 (the fourth eccentric sleeve 29 and the second worm gear 30 are integrally arranged or separately arranged). The second worm gear 30 and the fourth eccentric sleeve 29 are arranged on the second shaft 22 through the second rotating inner sleeve 32 or the fourth bearing. The second worm gear 30 and the fourth eccentric sleeve 29 will rotate on the second shaft 22 synchronously. The second worm gear 30 is connected to the drive of the second worm. The second worm is connected and arranged on the second holder 10. The second worm on the second holder 10 can be adjusted to drive the second worm gear 30 to rotate. The second holder 10 is connected to the second worm gear 30 through the second worm, which enables the second holder 10 to be connected to the second rotating inner sleeve 32. The distance of the axial center between the second roller bearer 11 on the second shaft 22 and the roller bearer (i.e., the plate roller bearer) on the plate roller 13 which are press-fitted with one another is adjusted to realize an adjustment of the fitting pressure between the second inking roller 12 on the second shaft 22 and the plate roller 13 which are matched with one another.

## Claims

1. An inking mechanism of an offset printing apparatus, comprising an ink vibrator (1); wherein a front side of the ink vibrator (1) is connected to a first shaft (21) through a first swinging arm (5); the first shaft (21) is provided with a first inking roller (2); a back side of the ink vibrator (1) is connected to a second shaft (22) through a second swinging arm (9); the second shaft (22) is provided with a second inking roller (12), wherein a left circular base and a right circular base which is opposite to the left circular base of the first inking roller (2) are respectively provided with a first holder (4); the first holder (4) is connected to the first shaft (21), the first holder (4) is rotatably arranged relative to the first shaft (21), and the first holder (4) is provided with a first roller bearer (3); a left circular base and a right circular base which is opposite to the left circular base of the second inking roller (12) are respectively provided with a second holder (10); the second holder (10) is connected to the second shaft (22), the second holder (10) is rotatably arranged relative to the second shaft (22), and the second holder (10) is provided with a second roller bearer (11) and the first inking roller (2) and the second inking roller (12) are respectively cooperating with and roll oppositely with a plate roller (13); wherein the first swinging arm (5) is closer than the second swinging arm (9) to the first roller bearer (3) or second roller bearer (11) in an axial direction of the ink vibrator (1);
**characterized in that**
a first pull arm (14) is connected between the first holder (4) and the second swinging arm (9); the first holder (4) and the second swinging arm (9) are respectively hinged to the first pull arm (14); a second pull arm (17) is connected between the second holder (10) and the first swinging arm (5); the second holder (10) and the first swinging arm (5) are respectively hinged to the second pull arm (17).

2. The inking mechanism of the offset printing apparatus according to claim 1, **characterized in that**, the first swinging arm (5) is connected to a first transmission device, and the second swinging arm (9) is connected to a second transmission device.

3. The inking mechanism of the offset printing apparatus according to claim 1, **characterized in that**, a roll shaft (8) of the ink vibrator (1) is connected in a roll sleeve (7), and the roll sleeve (7) is connected on a frame (6); the first swinging arm (5) and the second swinging arm (9) are respectively hinged on the roll sleeve (7).

4. The inking mechanism of the offset printing apparatus according to claim 3, **characterized in that**, the ink vibrator (1) is matched with and oppositely rolls with the first inking roller (2); a first eccentric sleeve (23) is arranged between the roll sleeve (7) and the first swinging arm (5); the ink vibrator (1) is matched with and oppositely rolls with the second ink roller (12); a second eccentric sleeve (24) is arranged between the roll sleeve (7) and the second swinging arm (9).

5. The inking mechanism of the offset printing apparatus according to claim 1, **characterized in that**, the first roller bearer (3) is arranged on the first holder (4) and rotates around a center of the first holder, and the first roller bearer (3) is arranged on the first holder (4) through a first radial adjustment device; the first radial adjustment device comprises a third eccentric sleeve (25); the third eccentric sleeve (25) is sleeved on the first shaft (21), and the third eccentric sleeve (25) is arranged relative to the first shaft (21) and capable of being adjusted by rotation; the first roller bearer (3) is sleeved outside the third eccentric sleeve (25), and the first roller bearer (3) is rotatably arranged relative to the third eccentric sleeve (25); a first worm gear (26) is sleeved on the first shaft (21); the first worm gear (26) is rotatably arranged relative to the first shaft (21); the first worm gear (26) is connected to the third eccentric sleeve (25); the third eccentric sleeve (25) and the first worm gear (26) are connected to form an integral structure or a separated structure; the first worm gear (26) is connected to a drive of a first worm; the first worm is arranged on the first holder (4) and capable of being adjusted by rotation; a first bearing (27) is arranged between the first roller bearer (3) and the third eccentric sleeve (25); a first rotating inner sleeve (28) is arranged on the first shaft (21); the first holder (4) is connected to the first rotating inner sleeve (28); the third eccentric sleeve (25) and the first worm gear (26) are sleeved on the first rotating inner sleeve (28) of the first shaft (21).

6. The inking mechanism of the offset printing apparatus according to claim 5, **characterized in that**, the first roller bearer (3) is arranged on the third eccentric sleeve (25) through the first bearing (27); the third eccentric sleeve (25) is connected to the first worm gear (26); the third eccentric sleeve (25) and the first worm gear (26) are connected to form an integral structure or a separated structure; the first worm gear (26) and the third eccentric sleeve (25) are arranged on the first shaft (21) through the first rotating inner sleeve (28) or a second bearing; the first worm gear (26) is connected to a drive of the first worm, and the first worm is arranged on the first holder (4).

7. The inking mechanism of the offset printing apparatus according to claim 6, **characterized in that**, the second roller bearer (11) is arranged on the second holder (10) and rotates around a center of the second roller bearer; the second roller bearer 11 is arranged on the second holder (10) through a second radial adjustment device; the second radial adjustment device comprises a fourth eccentric sleeve (29); the fourth eccentric sleeve (29) is sleeved on the second shaft (22), the fourth eccentric sleeve (29) is arranged relative to the second shaft (22) and capable of being adjusted by rotation; the second roller bearer (11) is sleeved outside the fourth eccentric sleeve (29), and the second roller bearer 11 is rotatably arranged relative to the fourth eccentric sleeve (29); a second worm gear (30) is sleeved on the second shaft (22); the second worm gear (30) is rotatably arranged relative to the second shaft (22); the second worm gear (30) is connected to the fourth eccentric sleeve (29); the fourth eccentric sleeve (29) and the second worm gear (30) are connected to form an integral structure or a separated structure; the second worm gear (30) is connected to a drive of a second worm; the second worm is arranged on the second holder (10) and capable of being adjusted by rotation; a third bearing (31) is arranged between the second roller bearer (11) and the fourth eccentric sleeve (29); a second rotating inner sleeve (32) is arranged on the second shaft (22); the second holder (10) is connected to the second rotating inner sleeve (32); the fourth eccentric sleeve (29) and the second worm gear (30) are sleeved on the second rotating inner sleeve (32) of the second shaft (22).

8. The inking mechanism of the offset printing apparatus according to claim 7, **characterized in that**, the second roller bearer (11) is arranged on the fourth eccentric sleeve (29) through the third bearing (31); the fourth eccentric sleeve (29) is connected to the second worm gear (30); the fourth eccentric sleeve (29) and the second worm gear (30) are connected to form an integral structure or a separated structure-; the second worm gear (30) and the fourth eccentric sleeve (29) are arranged on the second shaft (22) through the second rotating inner sleeve (32) or a fourth bearing; the second worm gear (30) is connected to a drive of the second worm, and the second worm is arranged on the second holder (10).

9. The inking mechanism of the offset printing apparatus according to claim 8, **characterized in that**, a fifth bearing is arranged between the first inking roller (2) and the first shaft (21), and a sixth bearing is arranged between the second inking roller (12) and the second shaft (22); alternatively, a seventh bearing is arranged between the first shaft (21) and the first swinging arm (5), and an eighth bearing is arranged between the second shaft (22) and the second swinging arm (9).

10. A printing press, comprising an offset printing press unit, **characterized in that**, the offset printing press unit comprises the inking mechanism of the offset printing apparatus according to any one of claims 1-9.

## Patentansprüche

1. Ein Farbwerk einer Offsetdruckvorrichtung, umfassend einen Farbenrüttler (1); wobei eine Vorderseite des Farbenrüttlers (1) mit einer ersten Welle (21) durch einen ersten Schwenkarm (5) verbunden ist; die erste Welle (21) mit einer ersten Farbwalze (2) vorgesehen ist; eine Rückseite des Farbenrüttlers (1) ist über einen zweiten Schwenkarm (9) mit einer zweiten Welle (22) verbunden; die zweite Welle (22) ist mit einer zweiten Farbwalze (12) vorgesehen, wobei eine linke kreisförmige Basis und eine rechte kreisförmige Basis, die der linken kreisförmigen Basis der ersten Farbwalze (2) gegenüberliegt, jeweils mit einem ersten Halter (4) vorgesehen sind; der erste Halter (4) mit der ersten Welle (21) verbunden ist, der erste Halter (4) relativ zu der ersten Welle (21) drehbar angeordnet ist, und der erste Halter (4) mit einem ersten Walzenträger (3) vorgesehen ist; eine linke kreisförmige Basis und eine rechte kreisförmige Basis, die der linken kreisförmigen Basis der zweiten Farbwalze (12) gegenüberliegt, jeweils mit einem zweiten Halter (10) vorgesehen sind; der zweite Halter (10) mit der zweiten Welle (22) verbunden ist, der zweite Halter (10) relativ zu der zweiten Welle (22) drehbar angeordnet ist, und der zweite Halter (10) mit einem zweiten Walzenträger (11) vorgesehen ist und die erste Farbwalze (2) und die zweite Farbwalze (12) jeweils mit einer Plattenwalze (13) zusammenwirken und entgegengesetzt zu ihr abrollen wobei der erste Schwenkarm (5) näher als der zweite Schwenkarm (9) an dem ersten Walzenträger (3) oder dem zweiten Walzenträger (11) in einer axialen Richtung des Farbenrüttlers (1) ist;
**dadurch gekennzeichnet, dass**
ein erster Zugarm (14) zwischen dem ersten Halter (4) und dem zweiten Schwenkarm (9) verbunden ist; der erste Halter (4) und der zweite Schwenkarm (9) jeweils an dem ersten Zugarm (14) angelenkt sind; ein zweiter Zugarm (17) zwischen dem zweiten Halter (10) und dem ersten Schwenkarm (5) verbunden ist; der zweite Halter (10) und der erste Schwenkarm (5) jeweils an dem zweiten Zugarm (17) angelenkt sind.

2. Das Farbwerk der Offsetdruckvorrichtung nach Anspruch 1, **dadurch gekennzeichnet, dass** der erste Schwenkarm (5) mit einer ersten Übertragungsvorrichtung und der zweite Schwenkarm (9) mit einer zweiten Übertragungsvorrichtung verbunden sind.

3. Das Farbwerk der Offsetdruckvorrichtung nach Anspruch 1, **dadurch gekennzeichnet, dass** eine Walzenwelle (8) des Farbenrüttlers (1) in einer Walzenhülse (7) verbunden ist und die Walzenhülse (7) mit einem Rahmen (6) verbunden ist; und dass der erste Schwenkarm (5) und der zweite Schwenkarm (9) jeweils an der Walzenhülse (7) angelenkt sind.

4. Das Farbwerk der Offsetdruckvorrichtung nach Anspruch 3, **dadurch gekennzeichnet, dass** der Farbenrüttler (1) mit der ersten Farbwalze (2) abgestimmt ist und gegenläufig abrollt; eine erste Exzenterhülse (23) zwischen der Walzenhülse (7) und dem ersten Schwenkarm (5) angeordnet ist; der Farbenrüttler (1) mit der zweiten Farbwalze (12) abgestimmt ist und gegenläufig abrollt; und eine zweite Exzenterhülse (24) zwischen der Walzenhülse (7) und dem zweiten Schwenkarm (9) angeordnet ist.

5. Das Farbwerk der Offsetdruckvorrichtung nach Anspruch 1, **dadurch gekennzeichnet, dass** der erste Walzenträger (3) auf dem ersten Halter (4) angeordnet ist und um ein Zentrum des ersten Halters rotiert, und der erste Walzenträger (3) über eine erste Radialverstellvorrichtung auf dem ersten Halter (4) angeordnet ist; die erste Radialverstellvorrichtung eine dritte Exzenterhülse (25) umfasst; die dritte Exzenterhülse (25) auf der ersten Welle (21) gelagert ist und die dritte Exzenterhülse (25) relativ zur ersten Welle (21) drehverstellbar angeordnet ist; der erste Walzenträger (3) außerhalb der dritten Exzenterhülse (25) gelagert ist und der erste Walzenträger (3) relativ zur dritten Exzenterhülse (25) drehbar angeordnet ist; ein erstes Schneckenrad (26) auf der ersten Welle (21) gelagert ist; das erste Schneckenrad (26) relativ zur ersten Welle (21) drehbar angeordnet ist; das erste Schneckenrad (26) ist mit der dritten Exzenterhülse (25) verbunden; die dritte Exzenterhülse (25) und das erste Schneckenrad (26) zu einer integralen Struktur oder einer getrennten Struktur verbunden sind; das erste Schneckenrad (26) mit einem Antrieb einer ersten Schnecke verbunden ist; die erste Schnecke auf dem ersten Halter (4) angeordnet und durch Drehen verstellbar ist; zwischen dem ersten Walzenträger (3) und der dritten Exzenterhülse (25) ein erstes Lager (27) angeordnet ist; auf der ersten Welle (21) eine erste rotierende Innenhülse (28) angeordnet ist; der erste Halter (4) mit der ersten rotierenden Innenhülse (28) verbunden ist; die dritte Exzenterhülse (25) und das erste Schneckenrad (26) auf der ersten rotierenden Innenhülse (28) der ersten Welle (21) gelagert sind.

6. Das Farbwerk der Offsetdruckvorrichtung nach Anspruch 5, **dadurch gekennzeichnet, dass** der erste Walzenträger (3) über das erste Lager (27) auf der dritten Exzenterhülse (25) angeordnet ist; die dritte Exzenterhülse (25) mit dem ersten Schneckenrad (26) verbunden ist; die dritte Exzenterhülse (25) und das erste Schneckenrad (26) zu einer integralen Struktur oder einer getrennten Struktur verbunden sind; das erste Schneckenrad (26) und die dritte Exzenterhülse (25) sind auf der ersten Welle (21) durch die erste rotierende Innenhülse (28) oder ein zweites Lager angeordnet; das erste Schneckenrad (26) mit einem Antrieb der ersten Schnecke verbunden ist, und die erste Schnecke auf dem ersten Halter (4) angeordnet ist.

7. Das Farbwerk der Offsetdruckvorrichtung nach Anspruch 6, **dadurch gekennzeichnet, dass** der zweite Walzenträger (11) auf dem zweiten Halter (10) angeordnet ist und um ein Zentrum des zweiten Walzenträgers rotiert; der zweite Walzenträger (11) über eine zweite Radialverstellvorrichtung auf dem zweiten Halter (10) angeordnet ist; die zweite Radialverstellvorrichtung eine vierte Exzenterhülse (29) umfasst; die vierte Exzenterhülse (29) auf der zweiten Welle (22) gelagert ist, die vierte Exzenterhülse (29) relativ zur zweiten Welle (22) angeordnet und durch Drehen verstellbar ist; der zweite Walzenträger (11) außerhalb der vierten Exzenterhülse (29) gelagert ist, und der zweite Walzenträger (11) relativ zur vierten Exzenterhülse (29) drehbar angeordnet ist; ein zweites Schneckenrad (30) auf der zweiten Welle (22) gelagert ist; das zweite Schneckenrad (30) relativ zur zweiten Welle (22) drehbar angeordnet ist; das zweite Schneckenrad (30) mit der vierten Exzenterhülse (29) verbunden ist; die vierte Exzenterhülse (29) und das zweite Schneckenrad (30) zu einer integralen Struktur oder einer getrennten Struktur verbunden sind; das zweite Schneckenrad (30) mit einem Antrieb einer zweiten Schnecke verbunden ist; die zweite Schnecke am zweiten Halter (10) angeordnet und durch Drehung verstellbar ist; zwischen dem zweiten Walzenträger (11) und der vierten Exzenterhülse (29) ein drittes Lager (31) angeordnet ist; auf der zweiten Welle (22) eine zweite drehbare Innenhülse (32) angeordnet ist; der zweite Halter (10) ist mit der zweiten drehbaren Innenhülse (32) verbunden ist; die vierte Exzenterhülse (29) und das zweite Schneckenrad (30) auf der zweiten drehbaren Innenhülse (32) der zweiten Welle (22) gelagert sind.

8. Das Farbwerk der Offsetdruckvorrichtung nach Anspruch 7, **dadurch gekennzeichnet, dass** der zweite Walzenträger (11) über das dritte Lager (31) auf der vierten Exzenterhülse (29) angeordnet ist; die vierte Exzenterhülse (29) mit dem zweiten Schneckenrad (30) verbunden ist; die vierte Exzenterhülse (29) und das zweite Schneckenrad (30) zu einer integralen Struktur oder einer getrennten Struktur verbunden sind-; das zweite Schneckenrad (30) und die vierte Exzenterhülse (29) auf der zweiten Welle (22) durch die zweite drehbare Innenhülse (32) oder ein viertes Lager angeordnet sind; das zweite Schneckenrad (30) mit einem Antrieb der zweiten Schnecke verbunden ist, und die zweite Schnecke auf dem zweiten Halter (10) angeordnet ist.

9. Das Farbwerk der Offsetdruckvorrichtung nach Anspruch 8, **dadurch gekennzeichnet, dass** ein fünftes Lager zwischen der ersten Farbwalze (2) und der ersten Welle (21) und ein sechstes Lager zwischen der zweiten Farbwalze (12) und der zweiten Welle (22) angeordnet ist; alternativ ein siebtes Lager zwischen der ersten Welle (21) und dem ersten Schwenkarm (5) und ein achtes Lager zwischen der zweiten Welle (22) und dem zweiten Schwenkarm (9) angeordnet ist.

10. Eine Druckpresse mit einer Offsetdruckpresseinheit, **dadurch gekennzeichnet, dass** die Offsetdruckpresseinheit das Farbwerk der Offsetdruckvorrichtung nach einem der Ansprüche 1-9 umfasst.

## Revendications

1. Mécanisme d'encrage d'un appareil d'impression offset, comprenant un vibrateur d'encre (1) ; dans lequel un côté avant du vibrateur d'encre (1) est connecté à un premier arbre (21) par un premier bras oscillant (5) ; le premier arbre (21) est pourvu d'un premier rouleau d'encrage (2) ; un côté arrière du vibrateur d'encre (1) est connecté à un deuxième arbre (22) par un deuxième bras oscillant (9) ; le deuxième arbre (22) est pourvu d'un deuxième rouleau d'encrage (12), dans lequel une base circulaire gauche et une base circulaire droite qui est opposée à la base circulaire gauche du premier rouleau d'encrage (2) sont respectivement pourvues d'un premier support (4) ; le premier support (4) est connecté au premier arbre (21), le premier support (4) est disposé de manière rotative par rapport au premier arbre (21), et le premier support (4) est pourvu d'un premier porteur de rouleau (3)
; une base circulaire gauche et une base circulaire droite qui est opposée à la base circulaire gauche du deuxième rouleau d'encrage (12) sont respectivement pourvues d'un deuxième support (10) ; le deuxième support (10) est connecté au deuxième arbre (22), le deuxième support (10) est disposé de manière rotative par rapport au deuxième arbre (22), et le deuxième support (10) est pourvu d'un deuxième porteur de rouleau (11) et le premier rouleau d'encrage (2) et le deuxième rouleau d'encrage (12) coopèrent respectivement avec et roulent de manière opposée avec un rouleau de plaque (13) ; dans lequel le premier bras oscillant (5) est plus proche que le deuxième bras oscillant (9) du premier porteur de rouleau (3) ou du deuxième porteur de rouleau (11) dans une direction axiale du vibrateur d'encre (1) ;
**caractérisé en ce qu'**un premier bras de traction (14) est connecté entre le premier support (4) et le deuxième bras oscillant (9) ; le premier support (4) et le deuxième bras oscillant (9) sont respectivement articulés au premier bras de traction (14) ; un deuxième bras de traction (17) est connecté entre le deuxième support (10) et le premier bras oscillant (5) ; le deuxième support (10) et le premier bras oscillant (5) sont respectivement articulés au deuxième bras de traction (17).

2. Mécanisme d'encrage d'un appareil d'impression offset selon la revendication 1, **caractérisé en ce que** le premier bras oscillant (5) est connecté à un premier dispositif de transmission, et le deuxième bras oscillant (9) est connecté à un deuxième dispositif de transmission.

3. Mécanisme d'encrage d'un appareil d'impression offset selon la revendication 1, **caractérisé en ce que** un arbre de rouleau (8) du vibrateur d'encre (1) est connecté dans un manchon de rouleau (7), et le manchon de rouleau (7) est connecté sur un cadre (6) ; le premier bras oscillant (5) et le deuxième bras oscillant (9) sont respectivement articulés sur le manchon de rouleau (7).

4. Mécanisme d'encrage d'un appareil d'impression offset selon la revendication 3, **caractérisé en ce que** le vibrateur d'encre (1) est mis en correspondance avec et roule en sens inverse avec le premier rouleau d'encrage (2) ; un premier manchon excentrique (23) est disposé entre le manchon de rouleau (7) et le premier bras oscillant (5) ; le vibrateur d'encre (1) est mis en correspondance avec et roule en sens inverse avec le deuxième rouleau d'encrage (12) ; un deuxième manchon excentrique (24) est disposé entre le manchon de rouleau (7) et le deuxième bras oscillant (9).

5. Mécanisme d'encrage d'un appareil d'impression offset selon la revendication 1, **caractérisé en ce que** le premier porteur de rouleau (3) est disposé sur le premier support (4) et tourne autour d'un centre du premier support, et le premier porteur de rouleau (3) est disposé sur le premier support (4) par un premier dispositif de réglage radial ; le premier dispositif de réglage radial comprend un troisième manchon excentrique (25) ; le troisième manchon excentrique (25) est manchonné sur le premier arbre (21), et le troisième manchon excentrique (25) est disposé par rapport au premier arbre (21) et peut être réglé par rotation ; le premier porteur de rouleau (3) est manchonné à l'extérieur du troisième manchon excentrique (25), et le premier porteur de rouleau (3) est disposé de manière rotative par rapport au troisième manchon excentrique (25) ; un premier engrenage à vis sans fin (26) est manchonné sur le premier arbre (21) ; le premier engrenage à vis sans fin (26) est disposé de manière rotative par rapport au premier arbre (21) ; le premier engrenage à vis sans fin (26) est connecté au troisième manchon excentrique (25) ; le troisième manchon excentrique (25) et le premier engrenage à vis sans fin (26) sont connectés pour former une structure intégrale ou une structure séparée ; le premier engrenage à vis sans fin (26) est connecté à un entraînement d'une première vis sans fin ; la première vis sans fin est disposée sur le premier porteur (4) et peut être réglée par rotation ; un premier palier (27) est disposé entre le premier support de rouleau (3) et le troisième manchon excentrique (25) ; un premier manchon interne rotatif (28) est disposé sur le premier arbre (21) ; le premier support (4) est connecté au premier manchon interne rotatif (28) ; le troisième manchon excentrique (25) et le premier engrenage à vis sans fin (26) sont manchonnés sur le premier manchon interne rotatif (28) du premier arbre (21).

6. Mécanisme d'encrage d'un appareil d'impression offset selon la revendication 5, **caractérisé en ce que** le premier porteur de rouleau (3) est disposé sur le troisième manchon excentrique (25) par le premier palier (27) ; le troisième manchon excentrique (25) est connecté au premier engrenage à vis sans fin (26) ; le troisième manchon excentrique (25) et le premier engrenage à vis sans fin (26) sont connectés pour former une structure intégrale ou une structure séparée ; le premier engrenage à vis sans fin (26) et le troisième manchon excentrique (25) sont disposés sur le premier arbre (21) par le premier manchon interne rotatif (28) ou un deuxième palier ; le premier engrenage à vis sans fin (26) est connecté à un entraînement de la première vis sans fin, et la première vis sans fin est disposé sur le premier support (4).

7. Mécanisme d'encrage d'un appareil d'impression offset selon la revendication 6, **caractérisé en ce que** le deuxième porteur de rouleau (11) est disposé sur le deuxième support (10) et tourne autour d'un centre du deuxième porteur de rouleau ; le deuxième porteur de rouleau (11) est disposé sur le deuxième support (10) par un deuxième dispositif de réglage radial ; le deuxième dispositif de réglage radial comprend un quatrième manchon excentrique (29) ; le quatrième manchon excentrique (29) est manchonné sur le deuxième arbre (22), le quatrième manchon excentrique (29) est disposé par rapport au deuxième arbre (22) et peut être réglé par rotation ; le deuxième porteur de rouleau (11) est manchonné à l'extérieur du quatrième manchon excentrique (29), et le deuxième porteur de rouleau (11) est disposé de manière rotative par rapport au quatrième manchon excentrique (29) ; un deuxième engrenage à vis sans fin (30) est manchonné sur le deuxième arbre (22) ; le deuxième engrenage à vis sans fin (30) est disposé de manière rotative par rapport au deuxième arbre (22) ; le deuxième engrenage à vis sans fin (30) est connecté au quatrième manchon excentrique (29) ; le quatrième manchon excentrique (29) et le deuxième engrenage à vis sans fin (30) sont connectés pour former une structure intégrale ou une structure séparée ; le deuxième engrenage à vis sans fin (30) est connecté à un entraînement d'une deuxième vis sans fin ; la deuxième vis sans fin est disposée sur le deuxième porteur (10) et peut être réglée par rotation ; un troisième palier (31) est disposé entre le deuxième support de rouleau (11) et le quatrième manchon excentrique (29) ; un deuxième manchon interne rotatif (32) est disposé sur le deuxième arbre (22) ; le deuxième support (10) est connecté au deuxième manchon interne rotatif (32) ; le quatrième manchon excentrique (29) et le deuxième engrenage à vis sans fin (30) sont manchonnés sur le deuxième manchon interne rotatif (32) du deuxième arbre (22).

8. Mécanisme d'encrage d'un appareil d'impression offset selon la revendication 7, **caractérisé en ce que** le deuxième porteur de rouleau (11) est disposé sur le quatrième manchon excentrique (29) par le troisième palier (31) ; le quatrième manchon excentrique (29) est connecté au deuxième engrenage à vis sans fin (30) ; le quatrième manchon excentrique (29) et le deuxième engrenage à vis sans fin (30) sont connectés pour former une structure intégrale ou une structure séparée ; le deuxième engrenage à vis sans fin (30) et le quatrième manchon excentrique (29) sont disposés sur le deuxième arbre (22) par le deuxième manchon interne rotatif (32) ou un quatrième palier ; le deuxième engrenage à vis sans fin (30) est connecté à un entraînement de la deuxième vis sans fin, et la deuxième vis sans fin est disposé sur le deuxième support (10).

9. Mécanisme d'encrage d'un appareil d'impression offset selon la revendication 8, **caractérisé en ce que** un cinquième palier est disposé entre le premier rouleau d'encrage (2) et le premier arbre (21), et un sixième palier est disposé entre le deuxième rouleau d'encrage (12) et le deuxième arbre (22) ; en alternative, un septième palier est disposé entre le premier arbre (21) et le premier bras oscillant (5), et un huitième palier est disposé entre le deuxième arbre (22) et le deuxième bras oscillant (9).

10. Presse d'impression, comprenant une unité de presse d'impression offset, **caractérisée en ce que**, l'unité de presse offset comprend le mécanisme d'encrage d'appareil d'impression offset selon l'une quelconque des revendications 1 - 9.
